# EUROPEAN PATENT SPECIFICATION

(11) **EP 1 015 146 B1**
(45) Date of publication and mention of the grant of the patent: **17.12.2003**
(21) Application number: 98901653.0
(22) Date of filing: 26.01.1998
(51) Int. Cl.: B21C 37/12, F16L 9/16, F16L 9/18

(54) **DOUBLE-WALLED STRUCTURE AND METHOD AND ARRANGEMENT FOR PRODUCING THE SAME**
DOPPELWANDIGE STRUKTUR UND VERFAHREN UND VORRICHTUNG ZU IHRER HERSTELLUNG
STRUCTURE A DOUBLE PAROI ET PROCEDE ET DISPOSITIF PERMETTANT DE PRODUIRE CETTE STRUCTURE

(30) Priority: 27.01.1997 SE 9700253; 27.01.1997 US 788246
(43) Date of publication of application: 05.07.2000
(73) Proprietor: Lindab AB, 269 82 Bastad (SE)
(72) Inventor: HULTBERG, Kent, S-269 42 Bastad (SE); RANTA, Teuvo, S-312 72 Laholm (SE)
(74) Representative: Rostovanyi, Peter
(86) International application number: SE9800103
(87) International publication number: WO98032551

(56) References cited:
- WO-A-94/07620
- GB-A- 1 574 480
- US-A- 4 160 312
- PATENT ABSTRACTS OF JAPAN, Vol. 6, No. 260, (M-180); & JP,A,57 154 314 (KUBOTA TEKKO K.K.) 24 Sept. 1982.
- DERWENT'S ABSTRACT, No. A-4356W/02, week A02; & SU,A,652 869 (PACIFIC ROLLER DIE) 20 March 1979.
- PATENT ABSTRACTS OF JAPAN, Vol. 7, No. 149, (M-225); & JP,A,58 058 928 (KAWASAKI JUKOGYO K.K.) 7 April 1983.

## Description

### Field of the Invention

The present invention relates to double-walled structures, such as silencers for use in ventilation duct systems, for instance of the type disclosed in GB-A-1,574,480. The invention also concerns the production of such double-walled structures. Further, the invention is related to the field of producing helically-wound lock-seam tubing, in particular for circular ventilation duct systems.

### Background Art

Double-walled structures for use in ventilation duct systems are well known in the art. In a brochure entitled "LindabSilencer" printed in 1988 and distributed by Lindab Ltd., various double-walled silencers are disclosed. On p. 2 of this Lindab brochure, the general construction of such silencers is described. A typical Lindab silencer comprises an inner tube of perforated thin metal sheet and an outer tube or casing which typically is a helically-wound lock-seam tube of thin metal sheet. The space between the two tubes is filled with sound-absorbing material, such as mineral wool, of different types and densities depending on the field of use. Between the perforated inner tube and the sound-absorbing material, there is a thin fibre layer, the purpose of which is to prevent fibres from the sound-absorbing material from being drawn into the air duct defined by the inner tube. Without such fibre layer, there is a risk that suction forces in the air duct will draw the insulation material into the duct and thereby impair the sound-absorbing effect of the silencer.

Several examples of circular double-walled silencers are shown in the above-mentioned Lindab brochure. Most of these silencers have end pieces at each end which are provided with tubular portions for connection to circular ducts in the ventilation duct system. Other double-walled structures (not shown in the Lindab brochure) are provided with insulation material over their full length, in which case no end pieces are mounted.

For the sake of completeness, reference is also made to Japanese Patent Abstract No. 1,211,608, in which an additional silencer structure is disclosed. Further, British Patent Publication No. 2,122,256 is mentioned as background art, in which Fig. 3 shows still another silencer.

In the prior-art described above, the thin fibre layer for covering the perforated inner tube is provided in the following manner. First, a rectangular piece of fibre material taken from a web-like supply is cut in a first separate operation. The shape of the fibre material piece is adapted to the shape and circumference of the perforated inner tube. Second, the cut fibre material piece is swept about the perforated inner tube, and third the fibre piece is fastened thereon, for instance by means of adhesive. Again, these are separate operations.

The operations are time-consuming and are often carried out manually, which is disadvantageous. The unnecessarily complicated operations for applying the fibre layer increase the total cost of the double-walled structure. Thus, there is a need for providing a new type of double-walled structure which is produced in an improved way.

It is known to use an inner tube in the shape of a helically-wound tube, which can basically be produced in an apparatus of the type disclosed in French Patent Publication No. 1,307,015. The purpose of the apparatus disclosed in this French publication is to provide a helically-wound lock-seam tube covered by a plastic layer on its inside. The inner plastic cover is intended to prevent corrosion on the inside of the tube. Thus, a strip of plastic material is applied on that side of the metal strip which forms the inside of the tube before the strip is supplied to the forming head. In order to provide a continuous plastic cover on the inside of the tube, the apparatus is equipped with a special welding unit for welding the joints of the helically formed plastic strip inside the tube.

### Summary of the Invention

An object of the invention is to eliminate the drawbacks mentioned above by providing an improved double-walled structure.

Another object of the invention is to provide an improved method and an improved apparatus for producing the double-walled structure in such a manner that the above-mentioned drawbacks are eliminated.

These and other objects, which will appear from the following description, have now been achieved by a double-walled structure having the features defined in appended claim 1. The objects are also achieved by a method and an arrangement in accordance with appended claims 11 and 14, as well as by a double-walled silencer as defined in appended claim 16. Preferred embodiments are recited in the subclaims.

By applying the second strip of fluid-permeable material on the first perforated strip and feeding these two strips together as a composite strip into the forming head, in which the two strips are helically wound together for forming the tubing, the double-walled structure itself as well as the production thereof can be remarkably simplified. No manual operations are required, but the inner perforated tube covered by the fluid-permeable material can be produced continuously in one machine, which has desirable advantages in that fewer and simpler operations are carried out, whereby the production is rationalised.

Since the fluid-permeable strip is helically wound together with the perforated strip, the cover of fluid-permeable material is securely fastened tightly on the perforated inner tube. Normally no additive is needed, and the production is simplified and more effective than prior-art techniques. In accordance with the invention, the longitudinal edge portions of the strip of fluid-permeable material are secured in the helical lock seam of the perforated tube, which significantly reduces the risk that the fluid-permeable cover comes loose from the tube.

The invention is applicable to many kinds of double-walled structures, such as long ventilation ducts which are provided with insulating material over their full length and which have no end pieces. Further, it should be noted that the double-walled structure of the invention is applicable to other products, such as filter assemblies in which the space between the tubes is filled with filter material for filtering various fluids.

### Brief Description of the Drawings

The invention will now be described in more detail with reference to the accompanying schematic drawings which show preferred embodiments of the invention and in which:
Fig. 1 is a perspective view from above of an arrangement for producing a double-walled structure in accordance with an embodiment of the invention,
Fig. 2 is a cross-section along the line II-II in Fig. 1 showing a metal strip, a cloth strip and guiding plates,
Fig. 3 is a cross-section of a tubing fed out of a forming head, along the line III-III in Fig. 1,
Fig. 4 is a detail of Fig. 3 showing on a larger scale a cross-section of a lock seam of the tube,
Fig. 5 shows the application of a piece of filler material on the tubing produced in the arrangement shown in Fig. 1,
Fig. 6 shows the insertion of the tube assembly in an outer tube, and
Fig. 7 shows the mounting of an end piece on one end of the double-walled structure.

### Description of Preferred Embodiments

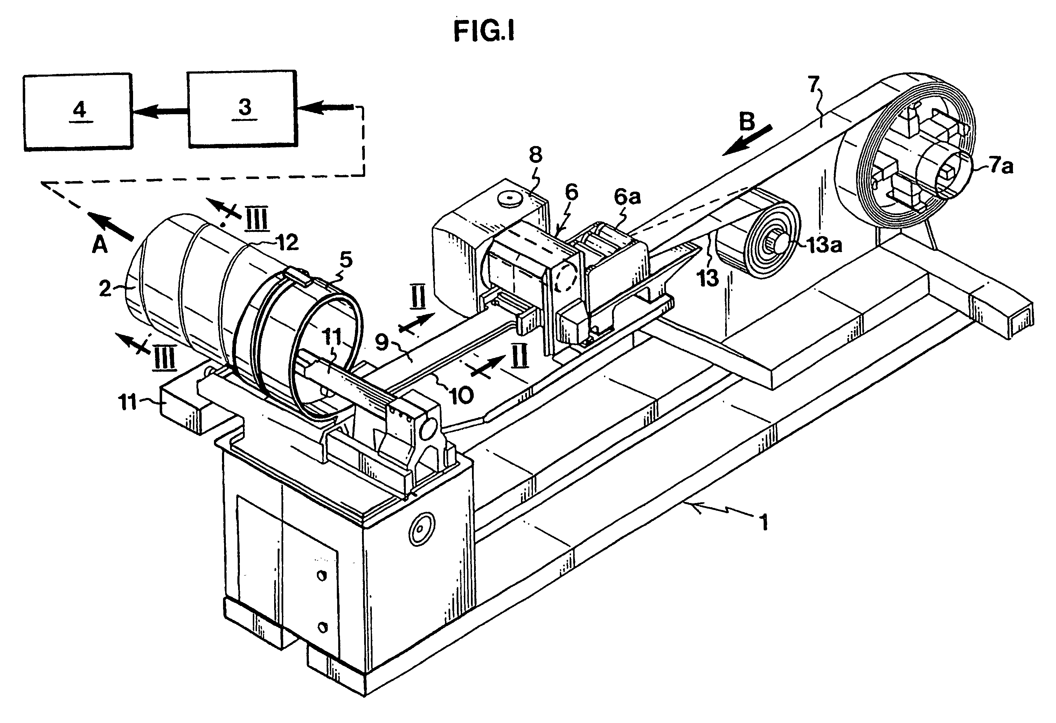

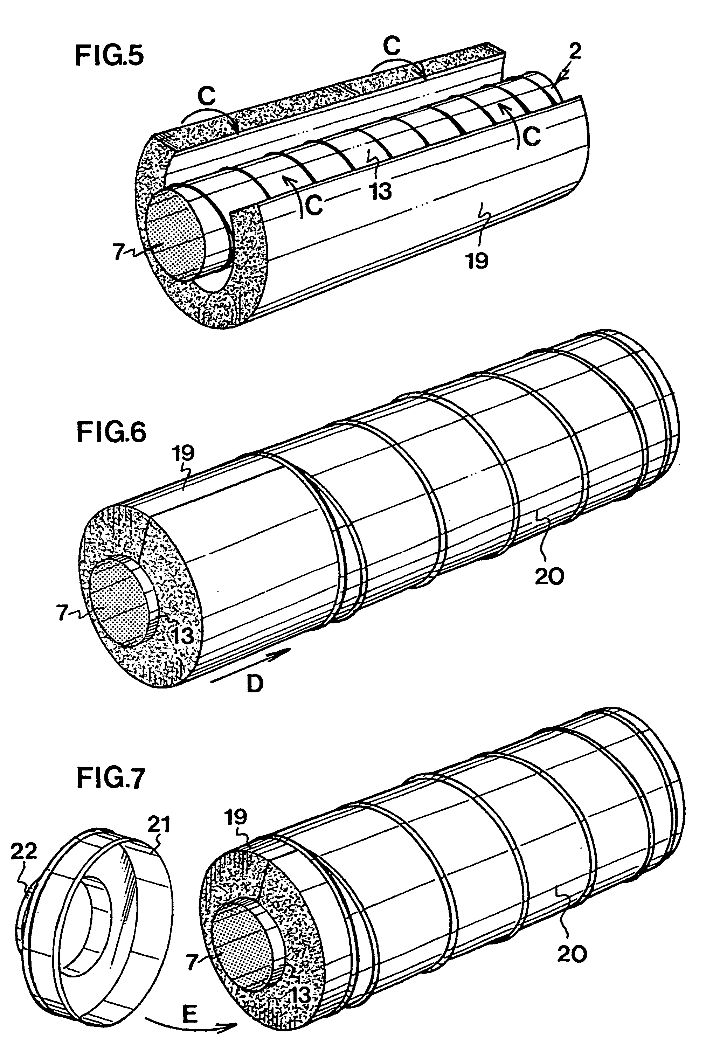

Fig. 1 shows an arrangement for producing a double-walled structure in accordance with a presently preferred embodiment of the invention. In the illustrated, non-limitative example, the double-walled structure is a silencer for use in a ventilation duct system (see Fig. 7).

The arrangement comprises a machine 1 for producing helically-wound lock-seam tubing 2, a schematically shown apparatus 3 for applying filler material, here sound-absorbing material, on the outside of the tubing 2 such that the tubing 2 and the sound-absorbing material form a tube assembly (see Fig. 5), and a schematically shown apparatus 4 for enclosing said tube assembly in a casing (see Figs 6-7). The two apparatus 3 and 4 may be of known construction and are therefore not described in detail here.

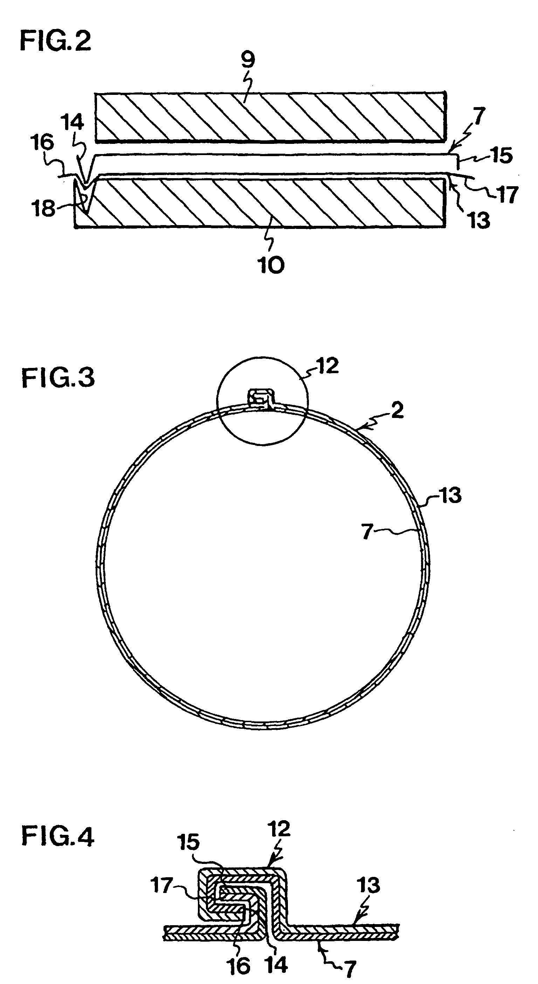

The machine 1 comprises a forming head 5 for forming the helically-wound lock-seam tubing 2 which is fed out of the forming head 5 (arrow A). Further, the machine 1 has a drive roller assembly 6 for feeding a first strip 7 which is wound on a reel 7a to the forming head 5 (arrow B). The rollers of the drive roller assembly 6 are driven by a drive unit 8. Guiding plates 9 and 10 are provided for guiding the first strip 7 into the forming head 5 (see Fig. 2).

After the forming head 5, a cutting unit 11 is provided for cutting the tubing 2 into suitable, predetermined lengths. The cutting unit 11 may be of a type known in the art and need not be described in detail here.

The first strip 7 is a perforated metal strip which forms the body of the tubing 2 fed out of the forming head 5 and having a helical lock seam 12.

A second strip 13 wound on a reel 13a is fed to the forming head 5 by means of the drive roller assembly 6. The second strip 13, which in this example is of a flexible, air-permeable material, is applied to that side of the perforated metal strip 7 which forms the outside of the tube body. Thus, the two strips 7 and 13 are joined in the drive roller assembly 6 and fed together as a composite strip into the forming head 5, in which this composite strip is helically formed into the tubing 2. It is preferred that the two strips 7 and 13 have substantially the same width. In an embodiment which in practice has shown excellent results, the air-permeable strip 13 is a cloth material, preferably a polymer material, and the metal strip 7 is of thin metal sheet.

Fig. 2 illustrates the two guiding plates 9 and 10 and the two strips 7 and 13 (the plates and strips being shown somewhat spaced apart for clarity reasons). Before the drive roller assembly 6, the two longitudinal edge portions 14 and 15 of the metal strip 7 are edge-formed as shown in Fig. 2 by means of edge-forming rollers 6a (see Fig. 1). This forming of the edge portions 14 and 15 is carried out in order to obtain a secure lock seam 12 of the tubing 2. The cloth strip 13, which has longitudinal edge portions 16 and 17, is held on the upper surface of the lower guiding plate 10. As is shown in Fig. 2, the lower guiding plate 10 has a V-shaped groove 18, which corresponds to the V-shaped edge portion 14 of the metal strip 7. The guiding plates 9 and 10 serve to guide the two strips 7 and 13 applied together in a secure manner into the forming head 5.

Fig. 3 shows a cross-section of the tubing 2 after the forming head 5. The two strips 7 and 13 are helically wound together, and the cloth strip 13 tightly covers the perforations of the metal strip 7 forming the body of the tubing 2.

A cross-section of the lock seam 12 of Fig. 3 is shown in detail in Fig. 4. For clarity reasons, the two bent edge portions of the tube wall of the lock seam 12 are shown at a small distance from each other in Fig. 4. In practice, these tube edge wall portions are clinched together in order to obtain a secure lock seam 12. It is, however, clear from Fig. 4 that the edge portions 16 and 17 of the cloth strip 13 are lock-seamed together with the edge portions 14 and 15 of the metal strip 7 such that the edge portions 16 and 17 of the cloth strip 13 are securely fastened in the helical lock seam 12 of the tubing 2.

The tubing 2 fed out of the forming head 5 is adapted to form the inner tube of a silencer for use in a ventilation duct system. The final steps for producing the silencer are shown in Figs 5-7.

Fig. 5 shows how a rectangular piece 19 of a filler or sound-absorbing material, preferably wool, is swept around the tubing 2 (arrows C) consisting of a perforated inner tube body formed of the metal strip 7 and covered by an air-permeable layer formed by the cloth strip 13. The wool piece 19 is applied on the outside of the tubing 2, and this tube assembly 2, 19 is inserted in a tubular casing 20 coaxial with the inner tube (see Fig. 6, arrow D).

Preferably, the casing 20 is a helically wound lock-seam tube formed from a strip of thin metal sheet. Fig. 7 shows how an end piece 21 is mounted on one end of the casing 20 (arrow E). The casing 20 is provided with one end piece 21 at each end. Each end piece 21 has a tubular portion 22 for connection to circular ducts (not shown) in a ventilation duct system. After mounting of the two end pieces 21, which are optional, the manufacturing of the aimed-at double-walled silencer is finished. In the double-walled structure achieved, the inner tube 2 is a first wall and the outer tube 20 is a second wall.

It should be noted that the shape of the casing 20 is not crucial; it may alternatively have other forms and cross-sections, such as elliptic, rectangular, etc.

Briefly, the method according to the preferred embodiment of the invention is carried out as follows.

The perforated metal strip 7 is fed to the forming head 5 together with the cloth strip 13 applied to that side of the metal strip 7 which forms the outside surface of the tube body. The two strips 7 and 13 are helically wound as a composite strip in the forming head 5, and the edge portions 16 and 17 of the cloth strip 13 are securely fastened in the helical lock seam 12. The tubing 2 consisting of the perforated, helically wound strip 7 covered by the likewise helically wound cloth strip 13 is cut in a suitable length corresponding to the aimed-at silencer. In the apparatus 3, the sound-absorbing material 19 is applied to the outside surface of the tube 2, and finally the tube assembly 2, 19 consisting of the helically wound tubing 2 and the sound-absorbing material 19 applied thereon is inserted in the tubular casing 20. Optionally, the casing 20 is closed by two end pieces 21.

Finally, it should be pointed out that the inventive concept is by no means restricted to the embodiments described herein, but modifications are feasible within the scope of the appended claims. In particular, it should be mentioned that the production of the double-walled structure may be carried out either in line, in which case the machine 1 and the two apparatus 3 and 4 are arranged in line, or in separate stations. In the latter case, lengths of tubing 2 are put in an intermediate supply before providing the sound-absorbing material 19 on the tubing 2 and before insertion of the tube assembly 2, 19 in the outer tube or casing 20. The filler material to be applied on the tubing fed out of the forming head can either be applied in the shape of a rectangular piece which is swept around the tubing, or applied in the shape of a strip which is helically wound on the outside of the tubing (not shown). Of course, there are other alternatives for applying the filler material.

## Claims

1. A double-walled structure, comprising: an inner tube (2) having a perforated wall; an outer casing (20) spaced from and enclosing the inner tube; a filler material (19) provided between the inner tube and the casing; and a cover (13) tightly applied on the outside of the inner tube and covering the perforated wall of the inner tube (2); said inner tube being a helically-wound lock-seam tube (2) formed from a perforated strip (7); **characterised in that** the cover is fluid-permeable and formed from an additional strip (13) helically wound together with the perforated strip (7); and that the fluid-permeable strip (13) has its longitudinal edge portions (16, 17) secured in the helical lock seam (12) of the inner tube (2).

2. The structure as claimed in claim 1, wherein said strips (7, 13) have substantially the same width.

3. The structure as claimed in claim 1 or 2, wherein the perforated strip is a metal strip (7).

4. The structure as claimed in any one of the preceding claims, wherein the fluid-permeable cover is of a cloth material (13).

5. The structure as claimed in claim 4, wherein the cloth material (13) is a polymer material.

6. The structure as claimed in any one of the preceding claims, wherein the outer casing is a tube (20) coaxial with the inner tube (2).

7. The structure as claimed in claim 6, wherein the outer tube (20) is a helically-wound lock-seam tube.

8. The structure as claimed in any one of the preceding claims, wherein the filler material (19) fills up the space between the inner tube (2) and the outer casing (20).

9. The structure as claimed in any one of the preceding claims, wherein the filler material (19) is a sound-absorbing material.

10. The structure as claimed in claim 9, wherein the sound-absorbing material is mineral wool.

11. A method for producing a double-walled structure, comprising the steps of: applying a strip (13) of a fluid-permeable material to a perforated strip (7) to form a composite strip (7, 13); helically forming said composite strip (7, 13) in a forming head (5) to form a helically-wound lock-seam tube (2), the outside surface of which being tightly covered by said fluid-permeable material; cutting the tube (2) into a predetermined length; applying a filler material (19) to the outside surface of the tube such that the tube and the filler material form an assembly (2, 19); and enclosing the assembly (2, 19) in a casing (20), wherein the longitudinal edge portions (16, 17) of the fluid-permeable strip (13) are secured in a helical lock seam (12) formed in the tube (2).

12. The method as claimed in claim 11, wherein the filler material (19) is applied in the shape of a rectangular piece which is swept and tightened around the tube (2) covered by the fluid-permeable material (13).

13. The method as claimed in claim 11, wherein the filler material (19) is applied in the shape of a strip which is helically wound on the outside surface of the tube (2) covered by the fluid-permeable material (13).

14. An arrangement for producing a double-walled structure, comprising a forming head (5) for forming helically-wound lock-seam tubing (2); means (6, 9, 10, 13a) for applying a strip (13) of a fluid-permeable material to a perforated strip (7) to form a composite strip (7, 13) before the forming head (5); means for helically forming said composite strip (7, 13) in the forming head (5) to form a helically-wound lock-seam tube (2), the outside surface of which being tightly covered by said fluid-permeable material; means (11) for cutting the tube (2) into a predetermined length; means for applying a filler material (19) to the outside surface of the tube (2) such that the tube and the filler material form an assembly (2, 19); and means for enclosing the assembly (2, 19) in a casing (20); said arrangement further comprising means for securing the longitudinal edge portions (16, 17) of the fluid-permeable strip (13) in a helical lock seam (12) of the tube (2).

15. The arrangement as claimed in claim 14, wherein said means for applying the fluid-permeable strip (13) on the perforated strip (7) comprises a reel (13a) on which the fluid-permeable strip (13) is wound, and guiding plates (9, 10) for feeding said composite strip (7, 13) into the forming head (5).

16. A double-walled silencer for use in a ventilation duct system, comprising an inner tube (2) having a perforated wall; an outer tube (20) spaced from and enclosing the inner tube (2); a tubular space defined by the inner tube (2) and the outer tube (20); and a sound-absorbing material (19) provided in and filling up said space between the inner tube (2) and the outer tube (20); said inner tube being a helically-wound lock-seam tube (2) formed from a perforated metal strip (7);
**characterised by** an air-permeable cover of a cloth material (13) tightly applied to the outside surface of the inner tube (2) and covering the perforated wall of the inner tube (2); the cloth cover being formed from a strip (13) helically wound together with the metal strip (7) and having its longitudinal edge portions secured in the helical lock seam (12) of the inner tube (2).

## Patentansprüche

1. Doppelwandige Struktur, die umfasst:
eine innere Röhre (2) mit einer perforierten Wand; ein äußeres Gehäuse (20), das von der inneren Röhre beabstandet ist und sie umschließt; ein Füllmaterial (19), das zwischen der inneren Röhre und dem Gehäuse vorhanden ist; sowie eine Abdeckung (13), die enganliegend auf die Außenseite der inneren Röhre aufgebracht ist und die perforierte Wand der inneren Röhre (2) abdeckt; wobei die innere Röhre ein Spiralfalzrohr (2) ist, das aus einem perforierten Band (7) besteht;
**dadurch gekennzeichnet, dass** die Abdeckung fluiddurchlässig ist und aus einem zusätzlichem Band (13) besteht, das zusammen mit dem perforierten Band (7) spiralförmig gewickelt ist; und dass die Längskantenabschnitte (16, 17) des fluiddurchlässigen Bandes (13) in dem Spiralfalz (12) der inneren Röhre (2) befestigt sind.

2. Struktur nach Anspruch 1, wobei die Bänder (7, 13) im Wesentlichen die gleiche Breite haben.

3. Struktur nach Anspruch 1 oder 2, wobei das perforierte Band ein Metallband (7) ist.

4. Struktur nach einem der vorangehenden Ansprüche, wobei die fluiddurchlässige Abdeckung aus einem Gewebematerial (13) besteht.

5. Struktur nach Anspruch 4, wobei das Gewebematerial (13) ein Polymermaterial ist.

6. Struktur nach einem der vorangehenden Ansprüche, wobei das äußere Gehäuse eine Röhre (20) ist, die koaxial zu der inneren Röhre (2) ist.

7. Struktur nach Anspruch 6, wobei die äußere Röhre (20) eine Spiralfalzröhre ist.

8. Struktur nach einem der vorangehenden Ansprüche, wobei das Füllmaterial (19) den Raum zwischen der inneren Röhre (2) und dem äußeren Gehäuse (20) ausfüllt.

9. Struktur nach einem der vorangehenden Ansprüche, wobei das Füllmaterial (19) ein schalldämpfendes Material ist.

10. Struktur nach Anspruch 9, wobei das schalldämpfende Material Mineralwolle ist.

11. Verfahren zum Herstellen einer doppelwandigen Struktur, das die folgenden Schritte umfasst:
Aufbringen eines Bandes (13) aus einem fluiddurchlässigen Material auf ein perforiertes Band (7), um ein Verbundband (7, 13) herzustellen; Spiralformen des Verbundbandes (7, 13) in einem Formkopf (5), um eine Spiralfalzröhre (2) zu formen, deren Außenfläche enganliegend durch das fluiddurchlässige Material abgedeckt wird; Schneiden der Röhre (2) auf eine vorgegebene Länge; Aufbringen eines Füllmaterials (19) auf die Außenfläche der Röhre, so dass die Röhre und das Füllmaterial eine Baugruppe (2, 19) bilden; und Einschließen der Baugruppe (2, 19) in einem Gehäuse (20), wobei die Längskantenabschnitte (16, 17) des fluiddurchlässigen Bandes (13) in einem Spiralfalz (12) befestigt werden, der in der Röhre (2) ausgebildet ist.

12. Verfahren nach Anspruch 11, wobei das Füllmaterial (19) in Form eines rechteckigen Stücks aufgebracht wird, das um die Röhre (2) herumgeschlagen und gespannt wird, die durch das fluiddurchlässige Material (13) abgedeckt ist.

13. Verfahren nach Anspruch 11, wobei das Füllmaterial (19) in Form eines Bandes aufgebracht wird, das spiralförmig auf die Außenfläche der Röhre (12) gewickelt wird, die durch das fluiddurchlässige Material (13) abgedeckt ist.

14. Anordnung zum Herstellen einer doppelwandigen Struktur, die einen Formkopf (5) zum Formen von Spiralfalz-Röhrenmaterial (2); eine Einrichtung (6, 9, 10, 13a) zum Aufbringen eines Bandes (13) aus fluiddurchlässigem Material auf ein perforiertes Band (7), um ein Verbundband (7, 13) vor dem Formkopf (5) auszubilden; eine Einrichtung zum Spiralformen des Verbundbandes (7, 13) in dem Formkopf (5), um eine Spiralfalzröhre (2) zu formen, deren Außenfläche enganliegend durch das fluiddurchlässige Material abgedeckt wird; eine Einrichtung (11 ) zum Schneiden der Röhre (2) auf eine vorgegebene Länge; eine Einrichtung zum Aufbringen eines Füllmaterials (19) auf die Außenfläche der Röhre (2), so dass die Röhre und das Füllmaterial eine Baugruppe (2, 19) bilden; und eine Einrichtung zum Einschließen der Baugruppe (2, 19) in einem Gehäuse (20) umfasst; wobei die Anordnung des Weiteren eine Einrichtung zum Befestigen der Längskantenabschnitte (16, 17) des fluiddurchlässigen Bandes (13) in einem Spiralfalz (12) der Röhre (2) umfasst.

15. Anordnung nach Anspruch 14, wobei die Einrichtung zum Aufbringen des fluiddurchlässigen Bandes (13) auf dem perforierten Band (7) eine Rolle (13a), auf die das fluiddurchlässige Band (13) gewickelt ist, sowie Führungsplatten (9, 10) zum Einleiten des Verbundbandes (7, 13) in den Formkopf (5) umfasst.

16. Doppelwandiger Geräuschdämpfer zum Einsatz in einem Lüftungsleitungssystem, der eine innere Röhre (2) mit einer perforierten Wand; eine äußere Röhre (20), die von der inneren Röhre (2) beabstandet ist und sie umschließt; einen röhrenförmigen Raum, der durch die innere Röhre (2) und die äußere Röhre (20) gebildet wird; und ein schalldämpfendes Material (19) umfasst, das in dem Raum zwischen der inneren Röhre (2) und der äußeren Röhre (20) vorhanden ist und ihn ausfüllt; wobei die innere Röhre eine Spiralfalzröhre (2) ist, die aus einem perforierten Metallband (7) besteht;
**gekennzeichnet durch** eine luftdurchlässige Abdeckung aus einem Gewebematerial (13), die enganliegend auf die Außenfläche der inneren Röhre (2) aufgebracht ist und die perforierte Wand der inneren Röhre (2) abdeckt; wobei die Gewebeabdeckung aus einem Band (13) besteht, das zusammen mit dem Metallband (7) spiralförmig gewickelt ist und dessen Längskantenabschnitte in dem Spiralfalz (12) der inneren Röhre (2) befestigt sind.

## Revendications

1. Structure à double paroi, comportant : un tube intérieur (2) ayant une paroi perforée; une enveloppe extérieure (20) éloignée de et enfermant le tube intérieur; une matière de remplissage (19) prévue entre le tube intérieur et l'enveloppe; et un revêtement (13) appliqué étroitement sur l'extérieur du tube intérieur et recouvrant la paroi perforée du tube intérieur (2); ledit tube intérieur étant un tube à sertissage enroulé de manière hélicoïdale (2) formé à partir d'une bande perforée (7); **caractérisé en ce que** le revêtement est perméable au fluide et formé à partir d'une bande additionnelle (13) enroulée de manière hélicoïdale avec la bande perforée (7); et **en ce que** la bande perméable au fluide (13) a ses parties de bord longitudinal (16, 17) fixées dans le sertissage hélicoïdal (12) du tube intérieur (2).

2. Structure selon la revendication 1, dans laquelle lesdites bandes (7, 13) ont sensiblement la même largeur.

3. Structure selon la revendication 1 ou 2, dans laquelle la bande perforée est une bande métallique (7).

4. Structure selon l'une quelconque des revendications précédentes, dans laquelle le revêtement perméable au fluide est dans une matière en toile (13).

5. Structure selon la revendication 4, dans laquelle la matière en toile (13) est une matière polymère.

6. Structure selon l'une quelconque des revendications précédentes, dans laquelle l'enveloppe extérieure est un tube (20) coaxial au tube intérieur (2).

7. Structure selon la revendication 6, dans laquelle le tube extérieur (20) est un tube à sertissage enroulé de manière hélicoïdale.

8. Structure selon l'une quelconque des revendications précédentes, dans laquelle la matière de remplissage (19) remplit l'espace entre le tube intérieur (2) et l'enveloppe extérieure (20).

9. Structure selon l'une quelconque des revendications précédentes, dans laquelle la matière de remplissage (19) est une matière insonorisante.

10. Structure selon la revendication 9, dans laquelle la matière insonorisante est de la laine minérale.

11. Procédé de fabrication d'une structure à double paroi, comportant les étapes consistant à : appliquer une bande (13) d'une matière perméable au fluide sur une bande perforée (7) afin de former une bande composite (7, 13); former de manière hélicoïdale ladite bande composite (7, 13) dans une tête de formage (5) afin de former un tube à sertissage enroulé de manière hélicoïdale (2), dont la surface extérieure est étroitement recouverte par ladite matière perméable au fluide; couper le tube (2) à une longueur prédéterminée; appliquer une matière de remplissage (19) sur la surface extérieure du tube de telle sorte que le tube et la matière de remplissage forment un ensemble (2, 19); et enfermant l'ensemble (2, 19) dans une enveloppe (20), les parties de bord longitudinal (16, 17) de la bande perméable au fluide (13) étant fixées dans un sertissage hélicoïdal (12) formé dans le tube (2).

12. Procédé selon la revendication 11, dans lequel la matière de remplissage (19) est appliquée sous la forme d'une pièce rectangulaire qui est inclinée et serrée autour du tube (2) recouvert par la matière perméable au fluide (13).

13. Procédé selon la revendication 11, dans lequel la matière de remplissage (19) est appliquée sous la forme d'une bande qui est enroulée de manière hélicoïdale sur la surface extérieure du tube (2) recouvert par la matière perméable au fluide (13).

14. Dispositif de fabrication d'une structure à double paroi, comportant une tête de formage (5) destinée à former un tuyau serti enroulé de manière hélicoïdale (2); des moyens (6, 9, 10, 13a) destinés à appliquer une bande (13) d'une matière perméable au fluide sur une bande perforée (7) afin de former une bande composite (7, 13) avant la tête de formage (5); des moyens destinés à former de manière hélicoïdale ladite bande composite (7, 13) dans la tête de formage (5) afin de former un tube à sertissage enroulé de manière hélicoïdale (2), dont la surface extérieure est étroitement recouverte par ladite matière perméable au fluide; des moyens (11) destinés à couper le tube (2) à une longueur prédéterminée; des moyens destinés à appliquer une matière de remplissage (19) sur la surface extérieure du tube (2) de telle sorte que le tube et la matière de remplissage forment un ensemble (2, 19); et des moyens destinés à enfermer l'ensemble (2, 19) dans une enveloppe (20); ledit dispositif comportant en outre des moyens destinés à fixer les parties de bord longitudinal (16, 17) de la bande perméable au fluide (13) dans un sertissage hélicoïdal (12) du tube (2).

15. Dispositif selon la revendication 14, dans lequel lesdits moyens destinés à appliquer la bande perméable au fluide (13) sur la bande perforée (7) comportent une bobine (13a) sur laquelle la bande perméable au fluide (13) est enroulée, et des plaques de guidage (9, 10) destinées à avancer ladite bande composite (7, 13) dans la tête de formage (5).

16. Silencieux à double paroi pour utilisation dans un système de conduit de ventilation, comportant un tube intérieur (2) ayant une paroi perforée; un tube extérieur (20) éloigné de et enfermant le tube intérieur (2); un espace tubulaire défini par le tube intérieur (2) et le tube extérieur (20); et une matière insonorisante (19) prévue dans et remplissant ledit espace entre le tube intérieur (2) et le tube extérieur (20); ledit tube intérieur étant un tube à sertissage enroulé de manière hélicoïdale (2) formé à partir d'une bande métallique perforée (7);
**caractérisé par** un revêtement perméable à l'air dans une matière en toile (13) appliquée étroitement sur la surface extérieure du tube intérieur (2) et recouvrant la paroi perforée du tube intérieur (2); le revêtement en toile étant formé à partir d'une bande (13) enroulée de manière hélicoïdale avec la bande métallique (7) et ayant ses parties de bord longitudinal dans le sertissage hélicoïdal (12) du tube intérieur (2).
